# EUROPEAN PATENT APPLICATION

(11) **EP 4 617 234 A2**
(43) Date of publication of application: **17.09.2025**
(21) Application number: 23893949.0
(22) Date of filing: 22.11.2023
(51) Int. Cl.: C01B 32/324

(54) **POROUS CARBON AND PREPARATION METHOD THEREFOR, AND SILICON-CARBON NEGATIVE ELECTRODE MATERIAL AND PREPARATION METHOD THEREFOR**

(30) Priority: 22.11.2022 CN 202211465094
(71) Applicant: Zhejiang Zhongning Silicon Industry Co., Ltd., Quzhou, Zhejiang 324000 (CN)
(72) Inventor: LI, Guangfeng, Quzhou, Zhejiang 324000 (CN); ZHENG, Anxiong, Quzhou, Zhejiang 324000 (CN); ZHANG, Pengfei, Quzhou, Zhejiang 324000 (CN); RUAN, Yuyue, Quzhou, Zhejiang 324000 (CN); KONG, Xiangyun, Quzhou, Zhejiang 324000 (CN)
(74) Representative: Chung, Hoi Kan
(86) International application number: PCT/CN2023/133487
(87) International publication number: WO 2024/109861

(57) **Abstract**

A porous carbon and a preparation method therefor, and a silicon-carbon negative electrode material and a preparation method therefor are provided. The porous carbon is used for preparing the silicon-carbon negative electrode material. The preparation method for the porous carbon includes: S100, using a biomass carbon source as a raw material, and carbonizing the biomass carbon source by means of heat treatment to prepare a crude product of the porous carbon; and S200, performing pore filling and sealing treatment on the crude product of the porous carbon prepared in S100 by using an organic carbon source by means of chemical vapor deposition so as to obtain a finished product of the porous carbon. The biomass carbon source includes: coconut shells, straw, rice husks, wood, bamboo, bagasse, and nutshells. By performing the pore filling and sealing treatment on the crude product of the porous carbon, pores with excessively small sizes in the porous carbon can be sealed, thereby reducing a specific surface area of the porous carbon.

## Description

### TECHNICAL FIELD

The present invention relates to the technical field of chemical processes, and specifically to a porous carbon and a preparation method therefor, and a silicon-carbon negative electrode material and a preparation method therefor.

### BACKGROUND

In the prior art, preparation methods for porous carbons mainly include processes such as activation methods and template methods. A physical activation method mainly involves using gases such as water vapor, carbon dioxide, and air as activators to come into contact with a carbonized material at a high temperature to perform activation and pore forming. A chemical activation method involves adding chemicals such as potassium hydroxide, phosphoric acid, and zinc chloride to raw materials and performing heating activation in an inert gas medium. According to the chemical activation method, a large amount of alkaline particles such as potassium hydroxide and sodium hydroxide are required. Moreover, the porous carbon prepared therefrom, although rich in pore structure, needs to be cleaned with a large amount of deionized water to make the material neutral so as to achieve the level of use. In addition, magnetic adsorption is required to remove metal ions, and a large amount of waste water is produced during preparation, which can easily cause environmental pollution.

According to the template methods, although pore structures can be controlled in an orderly manner, the cost of template preparation is high, and the prepared porous carbon still needs to be etched for template removal, resulting in high production costs and difficulty in industrialization. The template methods are divided into a hard template method and a soft template method. The hard template method involves first synthesizing a porous molecular sieve, taking the porous molecular sieve as a hard template, injecting a carbon precursor into a pore channel thereof to form a nano organic matter/silicon composite material, and then performing treatment by using high-temperature carbonization and template etching technologies to finally prepare a porous carbon material. The soft template method involves using a surfactant as a template agent, allowing the surfactant to interact with a carbon source, and performing self-assembly to form a porous structure.

Porous carbons with rich pore structures and high specific surface areas can be finally prepared by using biomass carbon such as coconut shells and rice straw as a raw material, or phenolic resin that is a chemical substance as a raw material, first performing high-temperature oxygen-isolated carbonization in a converter, and then performing secondary activation and pore forming.

The porous carbons with high specific surface areas can be used in fields of supercapacitors, hydrogen storage adsorption, and the like. However, porous carbons prepared by traditional processes contain a large number of micropores less than 1 nm, which cannot contribute to silane vapor deposition. Moreover, a large number of micropores less than 1 nm can lead to porous carbons having excessively high specific surface areas, which can reduce the initial efficiency when preparing a silicon-carbon negative electrode material, making such porous carbons unsuitable or unable to serve as a substrate for silane vapor deposition.

### SUMMARY

A technical problem to be solved by the present invention is how to control pore sizes of the porous carbons and reduce small-sized micropores of the porous carbons.

To solve the above problem, the present invention provides a preparation method for a porous carbon, and a silicon-carbon negative electrode material and a preparation method therefor.

The porous carbon is used for preparing the silicon-carbon negative electrode material, and the preparation method for the porous carbon includes:
S 100, using a biomass carbon source as a raw material, and carbonizing the biomass carbon source by means of heat treatment to prepare a crude product of the porous carbon; and
S200, performing pore filling and sealing treatment on the crude product of the porous carbon prepared in S100 by using an organic carbon source by means of chemical vapor deposition so as to obtain a finished product of the porous carbon.

In any of the above technical solutions, the biomass carbon source includes at least one or a combination of coconut shells, straw, rice husks, wood, bamboo, bagasse, and nutshells.

In any of the above technical solutions, the organic carbon source includes at least one or a combination of methane, ethane, propane, acetylene, ethylene, propylene, and toluene.

In any of the above technical solutions, S100 specifically includes:
S110, performing first-order heat treatment on the biomass carbon source in a protective atmosphere, and then cooling; and
S120, performing second-order heat treatment on the biomass carbon source under a condition of introducing water vapor, and then cooling to obtain the crude product of the porous carbon; where
the first-order heat treatment is used to cause the biomass carbon source to be carbonized and form pores, and the second-order heat treatment causes the pores of the biomass carbon source to be enlarged.

In any of the above technical solutions, the second-order heat treatment causes pore portions of the biocarbon source to be enlarged to 1 to 3 nm.

In any of the above technical solutions, a BET specific surface area of the crude product of the porous carbon is greater than or equal to 1800 m²·g⁻¹, for example, 1800 to 2000 m²·g⁻¹. For example, a proportion of mesopores (>2 nm) in the crude product of the porous carbon is less than or equal to 15%.

In any of the above technical solutions, a temperature range of the first-order heat treatment is 750°C to 850°C, and a temperature range of the second-order heat treatment is 850°C to 900°C. The temperature range of the first-order heat treatment is preferably 770°C to 850°C. The time for the first-order heat treatment is preferably 2 to 5 h, for example 2.5 h. The time for the second-order heat treatment is preferably 3 to 6 h, for example 5 h.

In any of the above technical solutions, between S110 and S120, S100 further includes: washing and drying the biomass carbon source that is subjected to the first-order heat treatment and the cooling; and

In any of the above technical solutions, after S120, S100 further includes: washing and drying the crude product of the porous carbon that is subjected to the second-order heat treatment and the cooling.

In any of the above technical solutions, S200 specifically includes:
S210, performing airflow pulverization on the crude product of the porous carbon, allowing a particle size of the crude product of the porous carbon to satisfy that DV50 is 5 µm to 8 µm; and
S220, feeding the crude product of the porous carbon into a fluidized bed reactor, and performing chemical vapor deposition under a pressure condition of 0.2 MPa to 0.3 MPa and a temperature condition of 700°C to 800°C by using the organic carbon source to obtain the finished product of the porous carbon.

In S220 of any of the above technical solutions, the temperature condition for the chemical vapor deposition is preferably 720 to 800°C, for example 740 to 760°C.

In S220 of any of the above technical solutions, a time for the chemical vapor deposition performed under the pressure condition of 0.2 MPa to 0.3 MPa and the temperature condition of 700°C to 800°C is 1 to 3 h. A BET specific surface area of the finished product of the porous carbon obtained is 1300 to 1700 m²·g⁻¹, for example, 1400 to 1600 m²·g⁻¹. For example, a proportion of mesopores (>2 nm) in the finished product of the porous carbon obtained is greater than or equal to 18%.

In any of the above technical solutions, after the pore filling and sealing treatment, pores with a size of less than 1 nm in the finished product of the porous carbon are sealed.

The present invention provides a porous carbon, where the porous carbon is obtained by the method according to any of the above technical solutions.

The present invention further provides a silicon-carbon negative electrode material, where the silicon-carbon negative electrode material is prepared from the finished product of the porous carbon that is obtained in any of the above technical solutions.

The present invention provides a silicon-carbon negative electrode material, where the silicon-carbon negative electrode material is prepared by taking a porous carbon as a raw material by means of silane vapor deposition, and the porous carbon is obtained by the method according to any of the above technical solutions.

The present invention provides a preparation method for the silicon-carbon negative electrode material, including the following steps: introducing a silicon source gas into the finished product of the porous carbon in a fluidized state to perform chemical vapor deposition so as to deposit silicon onto the porous carbon; and then introducing a carbon source gas to perform chemical vapor deposition so as to deposit carbon onto the porous carbon, thereby obtaining the silicon-carbon negative electrode material.

In any of the above technical solutions, a temperature for depositing the silicon onto the porous carbon by means of the chemical vapor deposition is 650 to 850°C, a pressure of the silicon source gas is 0.1 to 0.8 MPa, and a time is 3 to 10 h, for example 8 h.

In any of the above technical solutions, a temperature for depositing the carbon onto the porous carbon by means of the chemical vapor deposition is 600 to 800°C, and a time is 1 to 5 h. The pressure for depositing the carbon onto the porous carbon by means of the chemical vapor deposition is 0 to 0.3 MPa.

In any of the above technical solutions, the silicon source gas is a silane gas and/or a halogenated silane gas. The silane gas is a monosilane gas and/or a disilane gas; and the halogenated silane gas is a chlorosilane gas.

In any of the above technical solutions, the carbon source gas used for depositing the carbon onto the porous carbon by means of chemical vapor deposition is one or any combination of methane, ethane, propane, acetylene, ethylene, propylene, and toluene.

### BENEFICIAL EFFECTS

According to the present invention, during preparation of the porous carbon, the organic carbon source is used to seal tiny pores (especially those less than 1 nm) in a 1 nm porous carbon by means of chemical vapor deposition, thereby reducing the specific surface area of the porous carbon (which can be reduced to less than 1500 m²/g). The porous carbon can be taken as the raw material for preparing the silicon-carbon negative electrode material. Silicon can be deposited onto a surface of a porous carbon substrate by means of silane vapor deposition, thereby obtaining the silicon-carbon negative electrode material. However, the tiny pores (especially those less than 1 nm) cannot contribute to the silane vapor deposition, and a large number of micropores less than 1 nm can lead to the porous carbon having excessively high specific surface areas, which affects the mechanical properties and mechanical parameters of the silicon-carbon negative electrode material. Therefore, by performing pore filling and sealing treatment on the crude product of the porous carbon prepared in S100 during the preparation of the porous carbon, the tiny pores in the porous carbon can be sealed, the deposition efficiency in the process of preparing the silicon-carbon negative electrode material by means of chemical vapor deposition can be improved, the organic carbon source can be saved, and the mechanical properties and mechanical parameters of the silicon-carbon negative electrode material can be improved.

According to the present invention, during preparation of the silicon-carbon negative electrode material, silicon deposition followed by carbon deposition is performed for coating, such that a direct contact between silicon in the negative electrode material and an electrolyte after a battery is prepared can be effectively avoided, thereby preventing the electrolyte from reacting with the silicon and effectively improving the performance of products.

### BRIEF DESCRIPTION OF THE DRAWINGS

FIG. 1 shows a detection report of BET specific surface areas of a porous carbon prepared in Embodiment 5 without acetylene treatment;
FIG. 2 shows a detection report of BET specific surface areas of a porous carbon product prepared in Embodiment 5;
FIG. 3 shows a graph of BET specific surface areas of a silicon-carbon negative electrode material prepared in Embodiment 11;
FIG. 4 shows a graph of BET specific surface areas of a silicon-carbon negative electrode material prepared in Embodiment 12;
FIG. 5 shows a graph of BET specific surface areas of a silicon-carbon negative electrode material prepared in Comparative Embodiment 1;
FIG. 6 shows a graph of BET specific surface areas of a silicon-carbon negative electrode material prepared in Comparative Embodiment 2;
FIG. 7 shows a graph of a first-cycle charging and discharging curve for an electrochemical performance test of a battery using the silicon-carbon negative electrode material prepared in Embodiment 11;
FIG. 8 shows a graph of a first-cycle charging and discharging curve for an electrochemical performance test of a battery using the silicon-carbon negative electrode material prepared in Embodiment 12;
FIG. 9 shows a graph of a first-cycle charging and discharging curve for an electrochemical performance test of a battery using the silicon-carbon negative electrode material prepared in Comparative Embodiment 1;
FIG. 10 shows a graph of a first-cycle charging and discharging curve for an electrochemical performance test of a battery using the silicon-carbon negative electrode material prepared in Comparative Embodiment 2;
FIG. 11 shows a test curve of a capacity retention ratio of a battery using the silicon-carbon negative electrode material prepared in Embodiment 11; and
FIG. 12 shows a test curve of a capacity retention ratio of a battery using the silicon-carbon negative electrode material prepared in Comparative Embodiment 1.

### DETAILED DESCRIPTION OF EMBODIMENTS

In order to understand the above purposes, features, and advantages of the present invention more clearly, the present invention is further detailed below with reference to specific implementations. It should be noted that the embodiments of the present application and features in the embodiments can be combined with each other without conflict.

Many specific details are elaborated in the following description to facilitate a full understanding of the present invention. However, the present invention can also be implemented in other ways different from those described herein. Therefore, the scope of protection of the present invention is not limited by the specific embodiments disclosed below. The following technical features in the embodiments of the present invention can be combined with each other in case of no conflict.

The present invention provides a preparation method for a porous carbon. The porous carbon is used for preparing the silicon-carbon negative electrode material, and the preparation method for the porous carbon includes:
S100, using a biomass carbon source as a raw material, and carbonizing the biomass carbon source by means of heat treatment to prepare a crude product of the porous carbon; and
S200, performing pore filling and sealing treatment on the crude product of the porous carbon prepared in S100 by using an organic carbon source by means of chemical vapor deposition so as to obtain a finished product of the porous carbon.

In the above implementations, the biomass carbon source has the advantages of low cost and easy availability, and the preparation of the porous carbon using the biomass carbon source can achieve the beneficial effect of green environmental protection.

In some implementations of the present invention, the biomass carbon source includes at least one or a combination of coconut shells, straw, rice husks, wood, bamboo, bagasse, and nutshells.

It can be understood that the heat treatment may cause the biomass carbon source to be carbonized.

In some implementations of the present invention, a temperature range of the heat treatment is 700°C to 900°C.

In some implementations of the present invention, preferably, the temperature range of the heat treatment is 750°C to 850°C.

In some implementations of the present invention, further preferably, the temperature range of the heat treatment is 800°C.

It can be understood that the heat treatment may only include first-order heat treatment, or may include second-order or higher-order heat treatment.

In some implementations of the present invention, S100 specifically includes:
S110, performing first-order heat treatment on the biomass carbon source in a protective atmosphere, and then cooling; and
S120, performing second-order heat treatment on the biomass carbon source under a condition of introducing water vapor, and then cooling to obtain the crude product of the porous carbon; where
the first-order heat treatment is used to cause the biomass carbon source to be carbonized and form pores, and the second-order heat treatment causes the pores of the biomass carbon source to be enlarged.

Exemplarily, in some implementations of the present invention, after the first-order heat treatment, the biomass carbon source has pores ranging from 1 nm to 3 nm, and after the second-order heat treatment, the crude product of the porous carbon has pores less than 5 nm.

In some implementations of the present invention, a temperature range of the first-order heat treatment is 750°C to 850°C, and a temperature range of the second-order heat treatment is 850°C to 900°C.

In some implementations of the present invention, preferably, the temperature range of the first-order heat treatment is 780°C to 820°C, and the temperature range of the second-order heat treatment is 870°C to 890°C.

In some implementations of the present invention, further preferably, the temperature range of the first-order heat treatment is 800°C, and the temperature range of the second-order heat treatment is 880°C.

In some implementations of the present invention, between S110 and S120, S100 further includes: washing and drying the biomass carbon source that is subjected to the first-order heat treatment and the cooling.

After the first-order heat treatment, a carbonized material obtained at this time contains a large amount of microporous structures as well as a high content of ash and metal impurities. Therefore, it is necessary to remove the ash and metal impurities by means of washing and drying.

In some implementations of the present invention, after S120, S100 further includes: washing and drying the crude product of the porous carbon that is subjected to the second-order heat treatment and the cooling.

After the second-order heat treatment, the porous carbon obtained at this time needs to be washed and dried to remove deposited impurities caused by the chemical vapor deposition, thus facilitating subsequent treatment.

It can be understood that performing the chemical vapor deposition by using the organic carbon source is intended for performing pore filling and sealing treatment on the crude product of the porous carbon prepared in S100.

In some implementations of the present invention, the organic carbon source includes at least one or a combination of methane, ethane, propane, acetylene, ethylene, propylene, and toluene.

By performing pore filling and sealing treatment on the crude product of the porous carbon prepared in S100 during the preparation of the porous carbon, the tiny pores in the porous carbon can be sealed, the deposition efficiency in the process of preparing the silicon-carbon negative electrode material by means of chemical vapor deposition can be improved, the organic carbon source can be saved, and the mechanical properties and mechanical parameters of the silicon-carbon negative electrode material can be improved.

In some implementations of the present invention, S200 specifically includes:
S210, performing airflow pulverization on the crude product of the porous carbon, allowing a particle size of the crude product of the porous carbon to satisfy that DV50 is 5 µm to 8 µm; and
S220, feeding the crude product of the porous carbon into a fluidized bed reactor, and performing chemical vapor deposition under a pressure condition of 0.2 MPa to 0.3 MPa and a temperature condition of 700°C to 800°C by using the organic carbon source to obtain the finished product of the porous carbon.

In some implementations of the present invention, after the pore filling and sealing treatment, pores with a size of less than 1 nm in the finished product of the porous carbon are sealed.

### Embodiment 1

An embodiment of the present invention prepared a porous carbon, with a preparation method as follows: using coconut shells as a raw material for preparing the porous carbon, and heating the raw material to 750°C to 850 °C in a nitrogen atmosphere in a converter for carbonization, where a carbonized material obtained at this time contains a large amount of microporous structures as well as a high content of ash and metal impurities; and after ultrasonic cleaning and drying, feeding the carbonized material into the converter again, introducing water vapor to perform secondary activation and pore forming at 850 to 900°C, allowing part of pores to be enlarged to 1 to 3 nm, and then performing ultrasonic cleaning and drying again, performing airflow pulverization on an activated porous carbon to make a particle size (DV50) between 5 and 8 µm; feeding a pulverized porous carbon into a fluidized bed reactor, introducing acetylene to perform decomposition, pore filling, and deposition at a reaction pressure controlled between 0.2 and 0.3 MPa and a reaction temperature controlled between 700 and 800°C, filling and sealing micropores less than 1 nm, and collecting a product and packaging after reaction is completed. In this embodiment, a BET specific surface area of the pulverized porous carbon before acetylene treatment was approximately 1820 m²·g⁻¹, and a BET specific surface area of a treated porous carbon product was approximately 1450 m²·g⁻¹. Through calculation, a proportion of mesopores (>2 nm) was approximately 11.6% before treatment and increased to 18.8% after treatment, indicating a significant reduction in the micropores.

### Embodiment 2

An embodiment of the present invention prepared a porous carbon, with a preparation method as follows: using straw as a raw material for preparing the porous carbon, and heating the raw material to 750°C to 800 °C in a nitrogen atmosphere in a converter for carbonization; and after ultrasonic cleaning and drying, feeding a carbonized material into the converter again, introducing water vapor to perform secondary activation and pore forming at 850°C to 880°C, allowing part of pores to be enlarged to 1 to 3 nm, and then performing ultrasonic cleaning and drying again, performing airflow pulverization on an activated porous carbon to make a particle size (DV50) between 6 µm and 7 µm; feeding a pulverized porous carbon into a fluidized bed reactor, introducing methane to perform decomposition, pore filling, and deposition at a reaction pressure controlled between 0.2 and 0.3 MPa and a reaction temperature controlled between 740°C and 760°C, filling and sealing micropores less than 1 nm, and collecting a product and packaging after reaction is completed. In this embodiment, a BET specific surface area of the pulverized porous carbon before methane treatment was approximately 1810 m²·g⁻¹, and a BET specific surface area of a treated porous carbon product was approximately 1433 m²·g⁻¹. Through calculation, a proportion of mesopores (>2 nm) was approximately 13.3% before treatment and increased to 19.1% after treatment, indicating a significant reduction in the micropores.

### Embodiment 3

An embodiment of the present invention prepared a porous carbon, with a preparation method as follows: using nutshells as a raw material for preparing the porous carbon, and heating the raw material to 780°C to 800 °C in an argon atmosphere in a converter for carbonization; and after ultrasonic cleaning and drying, feeding a carbonized material into the converter again, introducing water vapor to perform secondary activation and pore forming at 880°C to 900°C, allowing part of pores to be enlarged to 1 to 3 nm, and then performing ultrasonic cleaning and drying again, performing airflow pulverization on an activated porous carbon to make a particle size (DV50) between 6 µm and 7 µm; feeding a pulverized porous carbon into a fluidized bed reactor, introducing ethane to perform decomposition, pore filling, and deposition at a reaction pressure controlled between 0.2 and 0.3 MPa and a reaction temperature controlled between 740°C and 760°C, filling and sealing micropores less than 1 nm, and collecting a product and packaging after reaction is completed. In this embodiment, a BET specific surface area of the pulverized porous carbon before ethane treatment was approximately 1878 m²·g⁻¹, and a BET specific surface area of a treated porous carbon product was approximately 1492 m²·g⁻¹. Through calculation, a proportion of mesopores (>2 nm) was approximately 11.3% before treatment and increased to 19.2% after treatment, indicating a significant reduction in the micropores.

### Embodiment 4

An embodiment of the present invention prepared a porous carbon, with a preparation method as follows: using rice husks as a raw material for preparing the porous carbon, and heating the raw material to 780°C to 800 °C in an argon atmosphere in a converter for carbonization; and after ultrasonic cleaning and drying, feeding a carbonized material into the converter again, introducing water vapor to perform secondary activation and pore forming at 880°C to 900°C, allowing part of pores to be enlarged to 1 to 3 nm, and then performing ultrasonic cleaning and drying again, performing airflow pulverization on an activated porous carbon to make a particle size (DV50) between 6 µm and 7 µm; feeding a pulverized porous carbon into a fluidized bed reactor, introducing propane to perform decomposition, pore filling, and deposition at a reaction pressure controlled between 0.2 and 0.3 MPa and a reaction temperature controlled between 740°C and 760°C, filling and sealing micropores less than 1 nm, and collecting a product and packaging after reaction is completed. In this embodiment, a BET specific surface area of the pulverized porous carbon before propane treatment was approximately 1954 m²·g⁻¹, and a BET specific surface area of a treated porous carbon product was approximately 1558 m²·g⁻¹. Through calculation, a proportion of mesopores (>2 nm) was approximately 13.1% before treatment and increased to 19.6% after treatment, indicating a significant reduction in the micropores.

### Embodiment 5

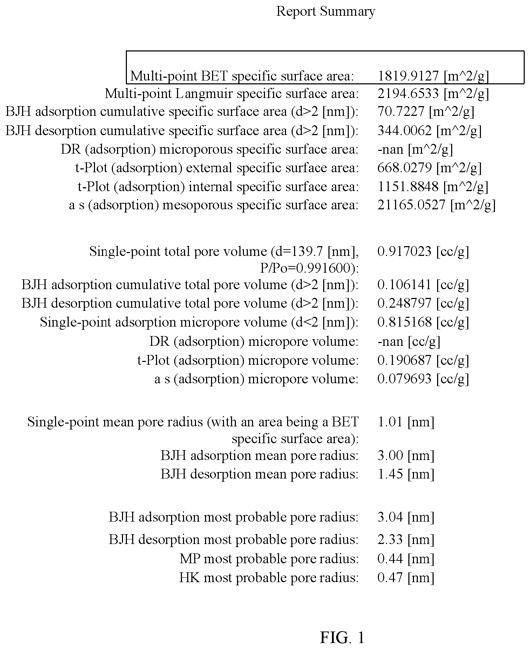

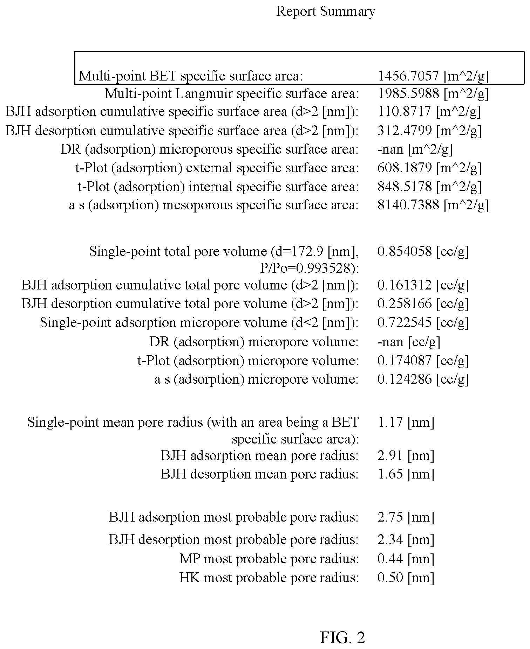

A preparation method for a porous carbon according to this embodiment included the following steps:
using coconut shells as a raw material for preparing the porous carbon, and heating the raw material to 800°C in a nitrogen atmosphere in a converter for carbonization, where a carbonization time was 2.5 h, and a carbonized material obtained at this time contains a large amount of microporous structures as well as a high content of ash and metal impurities; after ultrasonic cleaning and drying, feeding the carbonized material into the converter again, introducing water vapor to perform secondary activation and pore forming at 880°C, performing secondary activation and pore forming at 880°C for 5 h, allowing part of pores to be enlarged to 1 to 3 nm, and then performing ultrasonic cleaning and drying again, performing airflow pulverization on an activated porous carbon to make a particle size (DV50) between 5 and 8 µm; feeding a pulverized porous carbon into a fluidized bed reactor, introducing acetylene for 1 h to perform decomposition, pore filling, and deposition at a reaction pressure controlled to be 0.2 MPa and a reaction temperature controlled to be 750°C, filling and sealing micropores less than 1 nm, and collecting a product and packaging after reaction is completed. In this embodiment, a BET specific surface area of the pulverized porous carbon before acetylene treatment was approximately 1820 m²·g⁻¹, and a BET specific surface area of a treated porous carbon product was approximately 1450 m²·g⁻¹. Through calculation, a proportion of mesopores (>2 nm) was approximately 11.6% before treatment and increased to 18.8% after treatment, indicating a significant reduction in the micropores. Detection reports of the BET specific surface areas of the porous carbon before and after treatment were shown in FIG. 1 and FIG. 2, respectively.

### Embodiment 6

A preparation method for a porous carbon according to this embodiment included the following steps:
using straw as a raw material for preparing the porous carbon, and heating the raw material to 770°C in a nitrogen atmosphere in a converter for carbonization, where a carbonization time was 5 h; and after ultrasonic cleaning and drying, feeding a carbonized material into the converter again, introducing water vapor to perform secondary activation and pore forming at 870°C, performing secondary activation and pore forming at 870°C for 3 h, allowing part of pores to be enlarged to 1 to 3 nm, and then performing ultrasonic cleaning and drying again, performing airflow pulverization on an activated porous carbon to make a particle size (DV50) between 6 µm and 7 µm; feeding a pulverized porous carbon into a fluidized bed reactor, introducing methane for 3 h to perform decomposition, pore filling, and deposition at a reaction pressure controlled to be 0.3 MPa and a reaction temperature controlled to be 740°C, filling and sealing micropores less than 1 nm, and collecting a product and packaging after reaction is completed. In this embodiment, a BET specific surface area of the pulverized porous carbon before methane treatment was approximately 1810 m²·g⁻¹, and a BET specific surface area of a treated porous carbon product was approximately 1433 m²·g⁻¹. Through calculation, a proportion of mesopores (>2 nm) was approximately 13.3% before treatment and increased to 19.1% after treatment, indicating a significant reduction in the micropores.

### Embodiment 7

A preparation method for a porous carbon according to this embodiment included the following steps:
using nutshells as a raw material for preparing the porous carbon, and heating the raw material to 780°C in an argon atmosphere in a converter for carbonization, where a carbonization time was 4 h; and after ultrasonic cleaning and drying, feeding the carbonized material into the converter again, introducing water vapor to perform secondary activation and pore forming within 880°C, performing secondary activation and pore forming at 880°C to 900°C for 6 h, allowing part of pores to be enlarged to 1 to 3 nm, and then performing ultrasonic cleaning and drying again, performing airflow pulverization on an activated porous carbon to make a particle size (DV50) between 6 µm and 7 µm; feeding a pulverized porous carbon into a fluidized bed reactor, introducing ethane for 2 h to perform decomposition, pore filling, and deposition at a reaction pressure controlled to be 0.2 MPa and a reaction temperature controlled to be 740°C, filling and sealing micropores less than 1 nm, and collecting a product and packaging after reaction is completed. In this embodiment, a BET specific surface area of the pulverized porous carbon before ethane treatment was approximately 1878 m²·g⁻¹, and a BET specific surface area of a treated porous carbon product was approximately 1492 m²·g⁻¹. Through calculation, a proportion of mesopores (>2 nm) was approximately 11.3% before treatment and increased to 19.2% after treatment, indicating a significant reduction in the micropores.

### Embodiment 8

A preparation method for a porous carbon according to this embodiment included the following steps:
using rice husks as a raw material for preparing the porous carbon, and heating the raw material to 800°C in an argon atmosphere in a converter for carbonization, where a carbonization time was 2 h; and after ultrasonic cleaning and drying, feeding a carbonized material into the converter again, introducing water vapor to perform secondary activation and pore forming within 900°C, performing secondary activation and pore forming at 900°C for 3 h, allowing part of pores to be enlarged to 1 to 3 nm, and then performing ultrasonic cleaning and drying again, performing airflow pulverization on an activated porous carbon to make a particle size (DV50) between 6 µm and 7 µm; feeding a pulverized porous carbon into a fluidized bed reactor, introducing propane for 2 h to perform decomposition, pore filling, and deposition at a reaction pressure controlled to be 0.3 MPa and a reaction temperature controlled to be 740°C, filling and sealing micropores less than 1 nm, and collecting a product and packaging after reaction is completed. In this embodiment, a BET specific surface area of the pulverized porous carbon before propane treatment was approximately 1954 m²·g⁻¹, and a BET specific surface area of a treated porous carbon product was approximately 1558 m²·g⁻¹. Through calculation, a proportion of mesopores (>2 nm) was approximately 13.1% before treatment and increased to 19.6% after treatment, indicating a significant reduction in the micropores.

### Embodiment 9

A preparation method for a porous carbon according to this embodiment included the following steps:
using coconut shells as a raw material for preparing the porous carbon, and heating the raw material to 850°C in a nitrogen atmosphere in a converter for carbonization, where a carbonization time was 2 h; after ultrasonic cleaning and drying, feeding a carbonized material into the converter again, introducing water vapor to perform secondary activation and pore forming within 850°C, performing secondary activation and pore forming at 850°C for 3 h, allowing part of pores to be enlarged to 1 to 3 nm, and then performing ultrasonic cleaning and drying again, performing airflow pulverization on an activated porous carbon to make a particle size (DV50) between 5 and 8 µm; feeding a pulverized porous carbon into a fluidized bed reactor, introducing acetylene for 3 h to perform decomposition, pore filling, and deposition at a reaction pressure controlled to be 0.25 MPa and a reaction temperature controlled to be 720°C, filling and sealing micropores less than 1 nm, and collecting a product and packaging after reaction is completed. In this embodiment, a BET specific surface area of the pulverized porous carbon before acetylene treatment was approximately 1982 m²·g⁻¹, and a BET specific surface area of a treated porous carbon product was approximately 1534 m²·g⁻¹. Through calculation, a proportion of mesopores (>2 nm) was approximately 12.8% before treatment and increased to 19.8% after treatment, indicating a significant reduction in the micropores.

### Embodiment 10

A preparation method for a porous carbon according to this embodiment differed from that of Embodiment 9 only in that: in this embodiment, after feeding the pulverized porous carbon into the fluidized bed reactor, the temperature when acetylene was introduced for reaction was controlled to be 800°C. In this embodiment, a BET specific surface area of the pulverized porous carbon before acetylene treatment was approximately 1982 m²·g⁻¹, and a BET specific surface area of a treated porous carbon product was approximately 1498 m²·g⁻¹. Through calculation, a proportion of mesopores (>2 nm) was approximately 12.8% before treatment and increased to 20.7% after treatment, indicating a significant reduction in the micropores.

### Embodiment 11

A silicon-carbon negative electrode material according to this embodiment was prepared by using the porous carbon product prepared in Embodiment 5 as a raw material, and a specific preparation method included the following steps:
feeding a finished product of the porous carbon into a fluidized bed reactor, introducing nitrogen to keep the porous carbon in a fluidized state, controlling a temperature to be 800°C and a pressure of monosilane gas to be 0.5 MPa, introducing the monosilane gas to perform chemical vapor deposition, enabling monosilane and the porous carbon to be fully mixed during this process, depositing produced silicon onto pores of the porous carbon, and after 5 h of deposition, introducing acetylene gas to perform chemical vapor deposition at 700°C and 0.1 MPa, depositing produced carbon onto the porous carbon to coat the porous carbon with a coating time of 1 h, so as to prepare the silicon-carbon negative electrode material.

### Embodiment 12

A silicon-carbon negative electrode material according to this embodiment was prepared by using the porous carbon product prepared in Embodiment 6 as a raw material, and a specific preparation method included the following steps:
feeding a finished product of the porous carbon into a fluidized bed reactor, introducing nitrogen to keep the porous carbon in a fluidized state, controlling a temperature to be 850°C and a pressure of monosilane gas to be 0.8 MPa, introducing the monosilane gas to perform chemical vapor deposition, enabling monosilane and the porous carbon to be fully mixed during this process, depositing produced silicon onto pores of the porous carbon, and after 3 h of deposition, introducing acetylene gas to perform chemical vapor deposition at 800°C and 0.3 MPa, depositing produced carbon onto the porous carbon to coat the porous carbon with a coating time of 3 h, so as to prepare the silicon-carbon negative electrode material.

### Embodiment 13

A silicon-carbon negative electrode material according to this embodiment was prepared by using the porous carbon product prepared in Embodiment 7 as a raw material, and a specific preparation method included the following steps:
feeding a finished product of the porous carbon into a fluidized bed reactor, introducing nitrogen to keep the porous carbon in a fluidized state, controlling a temperature to be 650°C and a pressure of monosilane gas to be 0.1 MPa, introducing the monosilane gas to perform chemical vapor deposition, enabling monosilane and the porous carbon to be fully mixed during this process, depositing produced silicon onto pores of the porous carbon, and after 10 h of deposition, introducing acetylene gas to perform chemical vapor deposition at 700°C and atmospheric pressure, depositing produced carbon onto the porous carbon to coat the porous carbon with a coating time of 5 h, so as to prepare the silicon-carbon negative electrode material.

### Embodiment 14

A silicon-carbon negative electrode material according to this embodiment was prepared by using the porous carbon product prepared in Embodiment 8 as a raw material, and a specific preparation method included the following steps:
feeding a finished product of the porous carbon into a fluidized bed reactor, introducing nitrogen to keep the porous carbon in a fluidized state, controlling a temperature to be 700°C and a pressure of monosilane gas to be 0.3 MPa, introducing the monosilane gas to perform chemical vapor deposition, enabling monosilane and the porous carbon to be fully mixed during this process, depositing produced silicon onto pores of the porous carbon, and after 6 h of deposition, introducing acetylene gas to perform chemical vapor deposition at 600°C and 0.1 MPa, depositing produced carbon onto the porous carbon to coat the porous carbon with a coating time of 5 h, so as to prepare the silicon-carbon negative electrode material.

### Embodiment 15

A silicon-carbon negative electrode material according to this embodiment was prepared by using the porous carbon product prepared in Embodiment 9 as a raw material, and a specific preparation method included the following steps:
feeding a finished product of the porous carbon into a fluidized bed reactor, introducing nitrogen to keep the porous carbon in a fluidized state, controlling a temperature to be 750°C and a pressure of monosilane gas to be 0.4 MPa, and introducing the monosilane gas to perform chemical vapor deposition, where monosilane and the porous carbon need to be fully mixed, and silicon is deposited onto pores; and after 4 h of deposition, introducing acetylene gas to perform chemical vapor deposition at 750°C and 0.1 MPa, depositing produced carbon onto the porous carbon to coat the porous carbon with a coating time of 2 h, so as to prepare the silicon-carbon negative electrode material.

### Embodiment 16

A preparation method for a silicon-carbon negative electrode material according to this embodiment differed from that of Embodiment 15 only in that: the porous carbon used in this embodiment was the porous carbon product prepared in Embodiment 10.

### Comparative Embodiment 1

A preparation method for a silicon-carbon negative electrode material according to this comparative embodiment differed from that of Embodiment 10 only in that: this comparative embodiment took the pulverized porous carbon (i.e., a porous carbon not subjected to pore sealing treatment) in Embodiment 5 as a raw material.

### Comparative Embodiment 2

A preparation method for a silicon-carbon negative electrode material according to this comparative embodiment differed from that of Embodiment 11 only in that: this comparative embodiment took the pulverized porous carbon (i.e., a porous carbon not subjected to pore sealing treatment) in Embodiment 6 as a raw material.

### Comparative Embodiment 3

A preparation method for a silicon-carbon negative electrode material according to this comparative embodiment differed from that of Embodiment 12 only in that: this comparative embodiment took the pulverized porous carbon (i.e., a porous carbon not subjected to pore sealing treatment) in Embodiment 7 as a raw material.

### Comparative Embodiment 4

A preparation method for a silicon-carbon negative electrode material according to this comparative embodiment differed from that of Embodiment 13 only in that: this comparative embodiment took the pulverized porous carbon (i.e., a porous carbon not subjected to pore sealing treatment) in Embodiment 8 as a raw material.

### Comparative Embodiment 5

A preparation method for a silicon-carbon negative electrode material according to this comparative embodiment differed from that of Embodiment 14 only in that: this comparative embodiment took the pulverized porous carbon (i.e., a porous carbon not subjected to pore sealing treatment) in Embodiment 9 as a raw material.

### Comparative Embodiment 6

A preparation method for a silicon-carbon negative electrode material according to this comparative embodiment differed from that of Comparative Embodiment 1 only in that: in this comparative embodiment, after silicon deposition was completed, the material was taken out to be used as the silicon-carbon negative electrode material.

### Experimental Example

### 1) BET specific surface area test

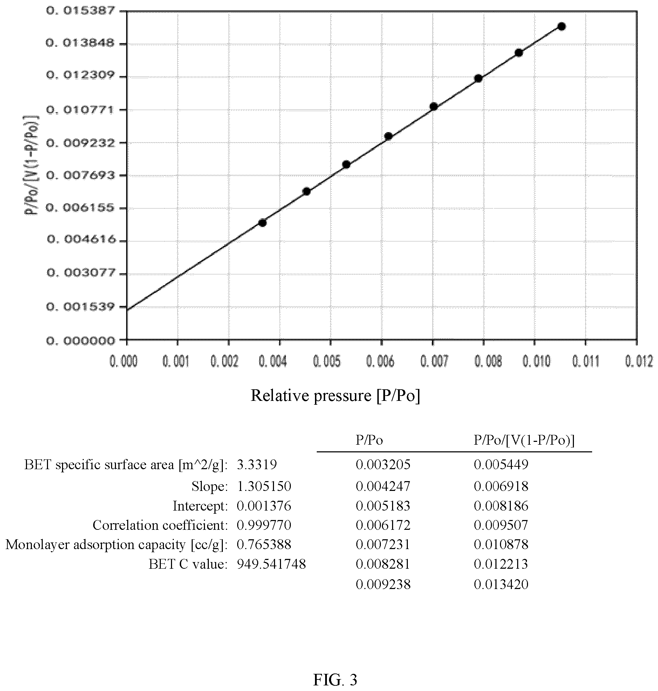

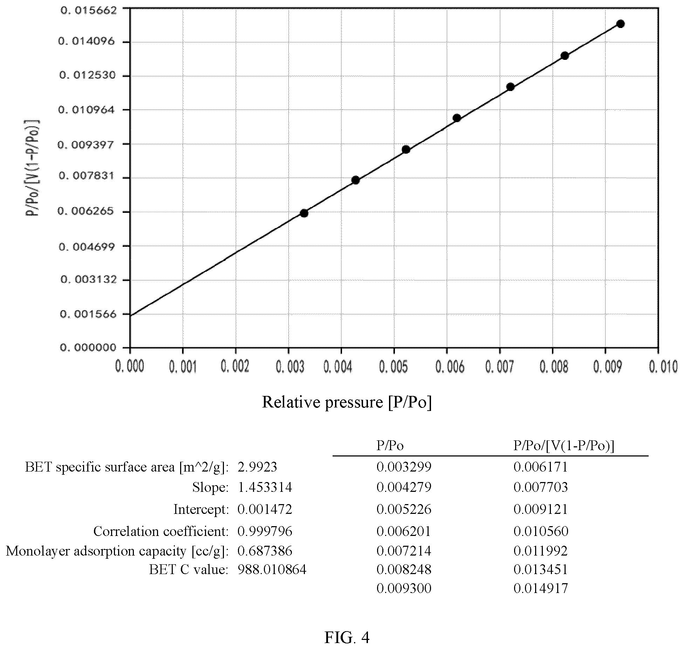

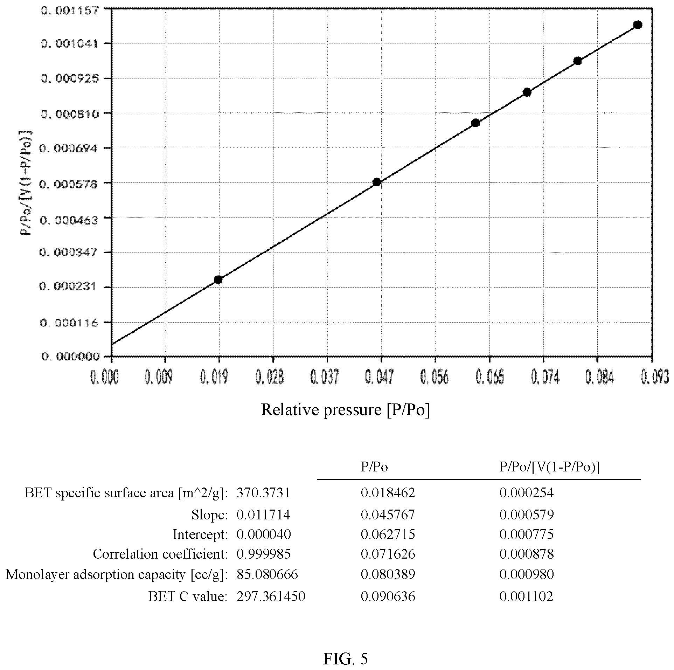

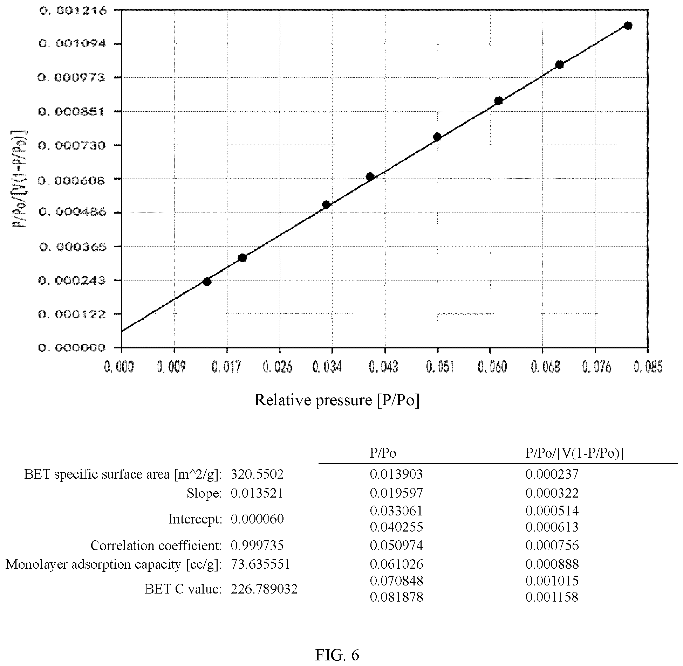

The BET specific surface areas of the silicon-carbon negative electrode materials prepared in Embodiments 11 to 16 and Comparative Embodiments 1 to 6 were measured, respectively, and the results were shown in Table 1. Among them, graphs of the BET specific surface areas of the silicon-carbon negative electrode materials in Embodiments 11 to 16 and Comparative Embodiments 1 to 2 were shown in FIG. 3 to FIG. 6.

**Table 1 BET specific surface areas of a porous carbon before and after being treated with a carbon source gas**

| | BET specific surface area (m²·g⁻¹) |
|---|---|
| Embodiment 11 | 3.33 |
| Embodiment 12 | 2.99 |
| Embodiment 13 | 4.59 |
| Embodiment 14 | 8.65 |
| Embodiment 15 | 7.39 |
| Embodiment 16 | 5.66 |
| Comparative Embodiment 1 | 370.37 |
| Comparative Embodiment 2 | 320.55 |
| Comparative Embodiment 3 | 280.32 |
| Comparative Embodiment 4 | 300.45 |
| Comparative Embodiment 5 | 279.65 |
| Comparative Embodiment 6 | 309.81 |

Based on data of Table 1, it could be seen that during preparation of silicon-carbon negative electrodes in Embodiments 11 to 16, the porous carbon was treated with an organic carbon source gas, and the BET specific surface areas decreased significantly compared to Comparative Embodiments 1 to 6, indicating that the pores of the porous carbon were sealed.

### 2) Electrochemical performance test

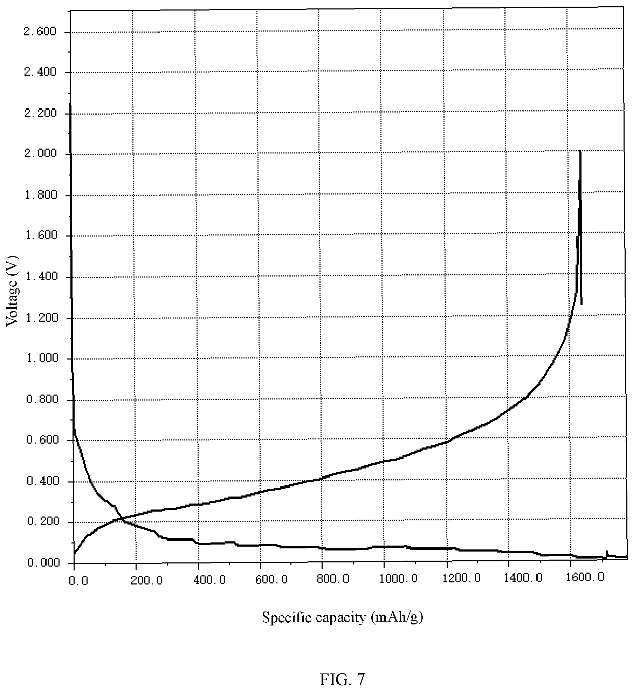

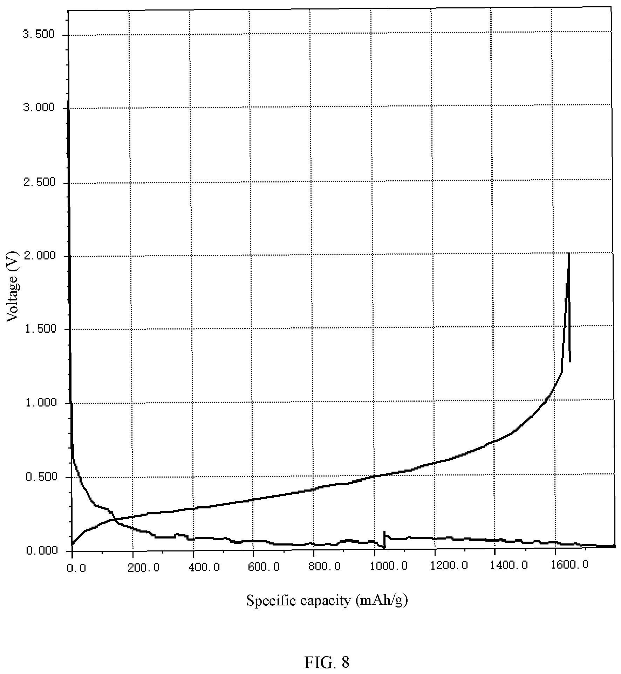

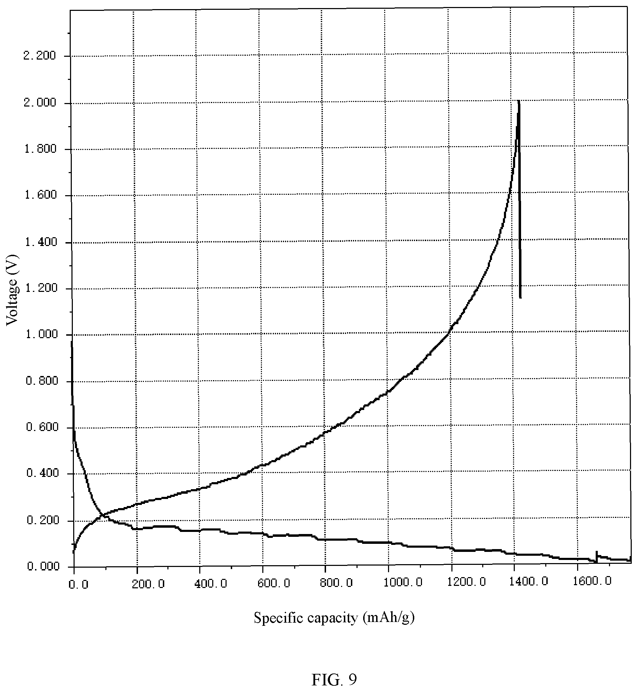

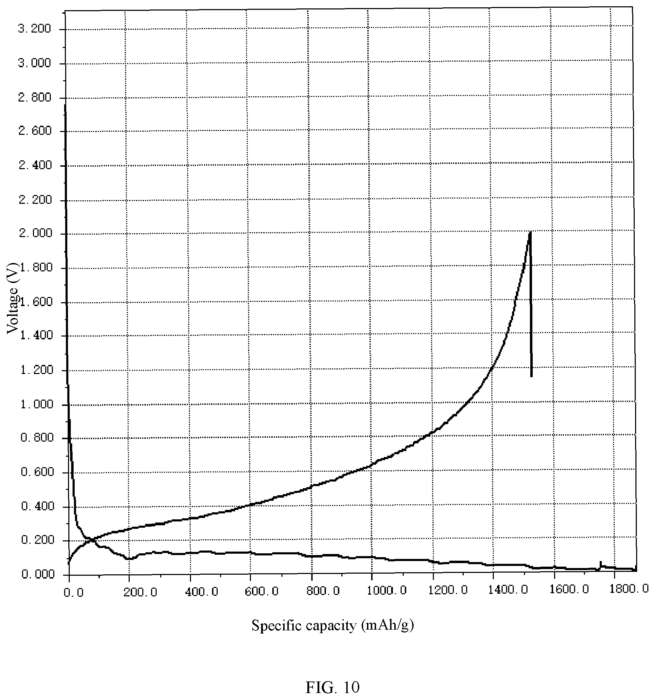

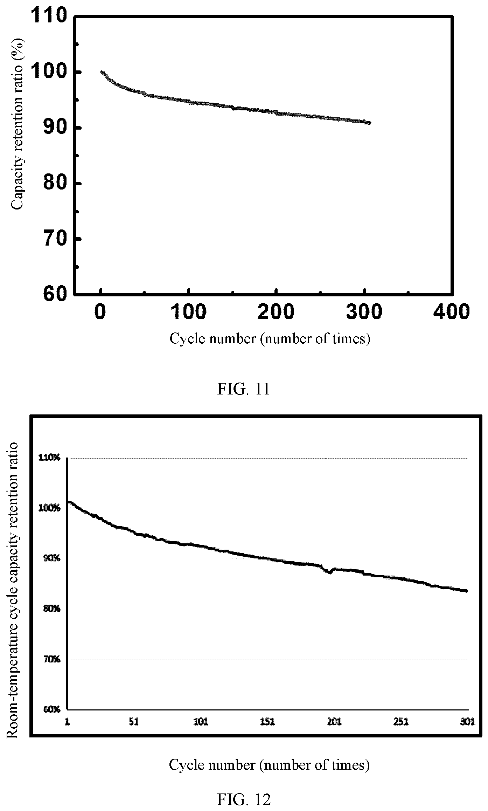

Negative electrode plates were prepared by taking the silicon-carbon negative electrode materials prepared in Embodiments 11 to 16 and Comparative Embodiments 1 to 6 as negative electrode materials, respectively. Negative electrode pole pieces were prepared by taking lithium sheets as a counter electrode and LiPF₆ as electrolyte salt (with a concentration of 1 mol/L in an electrolyte), with a proportion of the silicon-carbon negative electrode material to CMC/SBR to a conductive agent being equal to 80:10:10. Button batteries were prepared by using the same process, and then the first discharge specific capacity and the first coulombic efficiency of the button batteries were tested (0 to 2.0 V, 0.1C/0.1C). The silicon-carbon negative electrode materials prepared in Embodiments 11 to 16 and Comparative Embodiments 1 to 6 were respectively compounded with graphite to form a negative electrode material with a capacity of 500 mAh/g for a full battery cycle performance test over 300 cycle numbers (2.75 to 4.2 V, room temperature, 1C/1C). The prepared full battery took LiPF₆ as the electrolyte salt (with a concentration of 1 mol/L in the electrolyte) and a ternary material as a positive electrode material, and test results were shown in Table 2. Among them, for the button batteries using the silicon-carbon negative electrode materials prepared in Embodiments 11 to 16 and Comparative Embodiments 1 to 2, the graphs of first-cycle charging and discharging curves for electrochemical performance tests thereof were shown in FIG. 7 to FIG. 10; and for the full battery using the silicon-carbon negative electrode materials prepared in Embodiment 11 and Comparative Embodiment 1, test curves of capacity retention ratios thereof were shown in FIG. 11 to FIG. 12.

**Table 2 Performance test results of button batteries**

| Negative electrode material | First discharge specific capacity (mAh/g) | First coulombic efficiency (%) | Cycle retention ratio over 300 cycle numbers (%) |
|---|---|---|---|
| Embodiment 11 | 1780.59 | 92.07 | 91 |
| Embodiment 12 | 1797.25 | 92.01 | 90 |
| Embodiment 13 | 1680.71 | 90.29 | 91 |
| Embodiment 14 | 1810.35 | 90.54 | 90 |
| Embodiment 15 | 1740.87 | 89.95 | 90 |
| Embodiment 16 | 1809.44 | 89.33 | 91 |
| Comparative Embodiment 1 | 1770.57 | 80.65 | 82 |
| Comparative Embodiment 2 | 1872.05 | 81.74 | 81 |
| Comparative Embodiment 3 | 1677.66 | 81.09 | 82 |
| Comparative Embodiment 4 | 1784.11 | 80.29 | 80 |
| Comparative Embodiment 5 | 1757.76 | 81.63 | 81 |
| Comparative Embodiment 6 | 1793.49 | 80.94 | 79 |

Based on data of Table 2, it could be seen that the capacity of the silicon-carbon negative electrode material prepared from the porous carbon before and after being treated with the organic carbon source gas changed little, and no loss was caused. However, the first coulombic efficiency was greatly improved. In terms of cycle performance, the capacity of the button battery using the silicon-carbon negative electrode material that was prepared from the porous carbon without being treated with the organic carbon source gas remained around 82% after 300 cycles, while the capacity of the button battery using the silicon-carbon negative electrode material that was prepared from the porous carbon treated with the organic carbon source gas remained around 91% after 300 cycles. Therefore, both the first coulombic efficiency and the cycle performance of the button battery using the silicon-carbon negative electrode material that was prepared from the porous carbon treated with the organic carbon source gas were significantly improved.

In the present invention, the terms "first", "second", and "third" are merely intended for description and shall not be understood as an indication or implication of relative importance; and the term "a plurality of" refers to two or more, unless otherwise explicitly defined. The terms "mounted", "attached", "connected", "fixed", etc. should be understood in a broad sense. For example, "connected" may be a fixed connection, a detachable connection or an integral connection; and "attached" may be a direct attachment, or an indirect attachment through an intermediate medium. For those of ordinary skill in the art, the specific meanings of the above terms in the present invention can be understood based on specific circumstances.

In the description of this specification, the terms "an embodiment", "some embodiments", "specific embodiments", etc. are described to mean that specific features, structures, materials or characteristics described in conjunction with this embodiment or example are included in at least one embodiment or example of the present invention. In this specification, illustrative expressions of the above terms may not necessarily refer to the same embodiments or instances. Moreover, the specific features, structures, materials or characteristics described can be combined in any one or more embodiments or examples in a suitable manner. The above are only preferred embodiments of the present invention and are not intended to limit the present invention. For those skilled in the art, various modifications and variations can be made to the present invention. Any modifications, equivalent substitutions, improvements, etc. made within the spirit and principles of the present invention shall fall within the scope of protection of the present invention.

## Claims

1. A preparation method for a porous carbon, wherein the porous carbon is used for preparing a silicon-carbon negative electrode material, and the preparation method for a porous carbon comprises:
S100, using a biomass carbon source as a raw material, and carbonizing the biomass carbon source by means of heat treatment to prepare a crude product of the porous carbon; and
S200, performing pore filling and sealing treatment on the crude product of the porous carbon prepared in S100 by using an organic carbon source by means of chemical vapor deposition so as to obtain a finished product of the porous carbon.

2. The preparation method for a porous carbon according to claim 1, wherein
the biomass carbon source comprises at least one or a combination of coconut shells, straw, rice husks, wood, bamboo, bagasse, and nutshells; and
the organic carbon source comprises at least one or a combination of methane, ethane, propane, acetylene, ethylene, propylene, and toluene.

3. The preparation method for a porous carbon according to any one of claims 1 to 2, wherein S100 specifically comprises: S110, performing first-order heat treatment on the biomass carbon source in a protective atmosphere, and then cooling; and
S120, performing second-order heat treatment on the biomass carbon source under a condition of introducing water vapor, and then cooling to obtain the crude product of the porous carbon; wherein
the first-order heat treatment is used to cause the biomass carbon source to be carbonized and form pores, and the second-order heat treatment causes the pores of the biomass carbon source to be enlarged.

4. The preparation method for a porous carbon according to claim 3, wherein the second-order heat treatment causes pore portions of the biocarbon source to be enlarged to 1 to 3 nm.

5. The preparation method for a porous carbon according to claim 3, wherein
a temperature range of the first-order heat treatment is 750°C to 850°C, and a temperature range of the second-order heat treatment is 850°C to 900°C.

6. The preparation method for a porous carbon according to claim 5, wherein a temperature for the first-order heat treatment is 2 to 5 h, and a temperature for the second-order heat treatment is 3 to 6 h.

7. The preparation method for a porous carbon according to claim 3, wherein
between S110 and S120, S100 further comprises: washing and drying the biomass carbon source that is subjected to the first-order heat treatment and the cooling; and
after S120, S100 further comprises: washing and drying the crude product of the porous carbon that is subjected to the second-order heat treatment and the cooling.

8. The preparation method for a porous carbon according to any one of claims 1 to 2, wherein S200 specifically comprises: S210, performing airflow pulverization on the crude product of the porous carbon, allowing a particle size of the crude product of the porous carbon to satisfy that DV50 is 5 µm to 8 µm; and
S220, feeding the crude product of the porous carbon into a fluidized bed reactor, and performing chemical vapor deposition under a pressure condition of 0.2 MPa to 0.3 MPa and a temperature condition of 700°C to 800°C by using the organic carbon source to obtain the finished product of the porous carbon.

9. The preparation method for a porous carbon according to claim 8, wherein after the pore filling and sealing treatment, pores with a size of less than 1 nm in the finished product of the porous carbon are sealed.

10. The preparation method for a porous carbon according to claim 8, wherein a time for the chemical vapor deposition performed under the pressure condition of 0.2 MPa to 0.3 MPa and the temperature condition of 700°C to 800°C is 1 to 3 h.

11. A porous carbon, wherein the porous carbon is obtained by the method according to any one of claims 1 to 10.

12. A silicon-carbon negative electrode material, wherein the silicon-carbon negative electrode material is prepared by taking a porous carbon as a raw material by means of silane vapor deposition, and the porous carbon is obtained by the method according to any one of claims 1 to 10.

13. A silicon-carbon negative electrode material, wherein the silicon-carbon negative electrode material is made of the porous carbon that is prepared by the preparation method according to any one of claims 1 to 10.

14. A preparation method for the silicon-carbon negative electrode material according to claim 13, comprising the following steps: introducing a silicon source gas into the porous carbon in a fluidized state to perform chemical vapor deposition so as to deposit silicon onto the porous carbon; and then introducing a carbon source gas to perform chemical vapor deposition so as to deposit carbon onto the porous carbon, thereby obtaining the silicon-carbon negative electrode material.

15. The preparation method for the silicon-carbon negative electrode material according to claim 14, wherein a temperature for depositing the silicon onto the porous carbon by means of the chemical vapor deposition is 650 to 850°C, a pressure of the silicon source gas is 0.1 to 0.8 MPa, and a time is 3 to 10 h.

16. The preparation method for the silicon-carbon negative electrode material according to claim 14 or 15, wherein a temperature for depositing the carbon onto the porous carbon by means of the chemical vapor deposition is 600 to 800°C, and a time is 1to 5 h.
